# EUROPÄISCHE PATENTSCHRIFT

(11) **EP 0 638 580 B1**
(45) Veröffentlichungstag und Bekanntmachung des Hinweises auf die Patenterteilung: **30.12.1998**
(21) Anmeldenummer: 94112169.1
(22) Anmeldetag: 04.08.1994
(51) Int. Cl.: C07F 9/50, C07F 9/535

(54) **Verfahren zur Herstellung von Triphenylphosphin**
Process for the preparation of triphenyl phosphine
Procédé de préparation de triphényl phosphine

(30) Priorität: 11.08.1993 DE 4326952
(43) Veröffentlichungstag der Anmeldung: 15.02.1995
(73) Patentinhaber: BASF Aktiengesellschaft, 67063 Ludwigshafen (DE)
(72) Erfinder: Hermeling, Dr. Dieter, D-67227 Frankenthal (DE); Bassler, Dr. Peter, D-68519 Viernheim (DE); Hammes, Dr. Peter, D-67152 Ruppertsberg (DE); Hugo, Randolf, D-68307 Mannheim (DE); Lechtken, Dr. Peter, D-67227 Frankenthal (DE); Siegel, Dr. Hardo, D-67346 Speyer (DE)

(56) Entgegenhaltungen:
- EP-A- 0 548 682
- DE-B- 1 192 205
- GB-A- 1 029 924
- US-A- 3 780 111

## Beschreibung

Die vorliegende Erfindung betrifft ein verbessertes Verfahren zur Herstellung von Triphenylphosphin (TPP) durch Umsetzung von Triphenylphosphindichlorid (TPPCl₂) mit Magnesium, Aluminium und/oder Eisen in Gegenwart eines inerten Lösungsmittels.

TPP dient, wie allgemein bekannt ist, im technischen Maßstab nach der sogenannten Wittigschen Ylid-Synthese zur Herstellung olefinischer Verbindungen wie Vitamin A, wobei das in stöchiometrischer Menge eingesetzte TPP zum Triphenylphosphinoxid (TPPO) oxidiert wird.

Da für das TPPO nur wenige Anwendungen bekannt sind und da es als äußerst stabile Substanz nur schwer entsorgt werden kann, hat es nicht an zahlreichen Versuchen gefehlt, es wieder in das TPP zu überführen.

Die Direktreduktion mit Hilfe starker Reduktionsmittel wie Alanaten und Silanen ist jedoch zu teuer, und auch der Umweg über die Chlorierung des TPPO mit einem Chlorierungsmittel zum Triphenylphosphindichlorid (TPPCl₂) und anschließende Reduktion des TPPCl₂ mit einem weniger hochwertigen Reduktionsmittel ließ wirtschaftlich noch zu wünschen übrig.

Dies gilt auch für die aus der DE-B 11 92 205 und GB-B 10 29 924 (Seite 2, Zeilen 104 bis 110) bekannte Reaktionsfolge 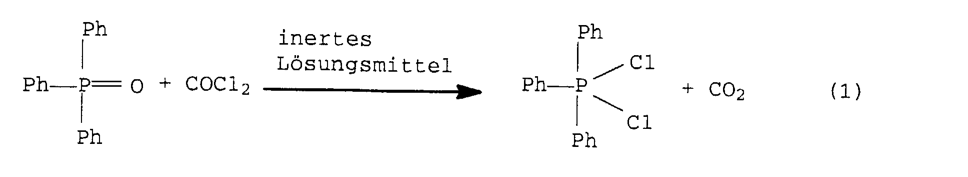 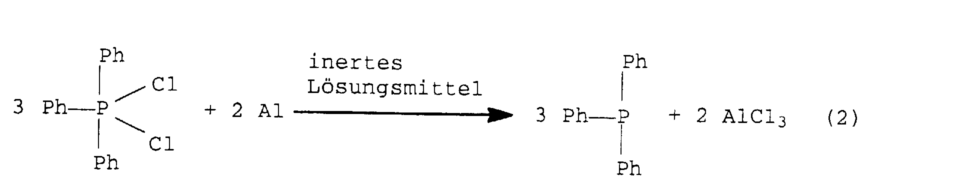 bei der die billigen Einsatzstoffe Phosgen und Aluminium verwendet werden. Während bei diskontinuierlichem Betrieb ein annähernd vollständiger Umsatz erreicht werden kann, gestaltet sich eine kontinuierliche Fahrweise durch Kombination der beiden Reaktionen (1) und (2) als äußerst schwierig. Wegen der relativ langsamen Reaktionen werden hier bei wirtschaftlich dimensionierten Reaktoren nur mäßige Ausbeuten an TPP erreicht.

In der GB-A 1,029,924 wird ein diskontinuierliches Verfahren zur Herstellung von TPPCl₂ aus TPPO beschrieben.

Der Erfindung lag daher die Aufgabe zugrunde, diesem Nachteil abzuhelfen und die Umsetzung von TPPCl₂ zu TPP wirtschaftlicher und verfahrenstechnisch einfacher zu gestalten als bisher.

Demgemäß wurde ein Verfahren zur kontinuierlichen Herstellung von Lösungen aus einem inerten Lösungsmittel und TPPCl₂, deren Gehalt an Phosgen, Chlor, Diphosgen, Chlorwasserstoff, Thionylchlorid, Sulfurylchlorid, Phosphortrichlorid, Phosphoroxychlorid und/oder aliphatischen Halogenverbindungen ("aktive Chlorverbindungen") unter 1000 ppm Cl liegt, durch Umsetzung von Triphenylphosphinoxid (TPPO) mit Phosgen in dem inerten Lösungsmittel gefunden, welches dadurch gekennzeichnet ist, daß man
a) die TPPO enthaltene Lösung und das Phosgen in einem oder mehreren nacheinander geschalteten Reaktionsgefäßen R im Gegenstrom zueinander führt,
b) die in das System eingeführte TPPO-Lösung in einer vorgeschalteten Waschkolonne W mit Phosgen aus dem entgegenströmenden Phosgenstrom unter solchen Bedingungen, unter denen sich das Phosgen löst, anreichert und aus der Waschkolonne den CO₂-Strom, der noch etwas Phosgen enthalten kann, entfernt, und daß man
c) die Lösung, welche das letzte der Reaktionsgefäße R verläßt, in eine Destillationskolonne D überführt, aus welcher das Phosgen und die "aktiven Chlorverbindungen" zusammen mit einem Teil des Lösungsmittels abdestilliert werden, wobei dieses Gemisch wieder in das letzte Reaktionsgefäß zurückgeführt wird, in welches auch das frische Phosgen im Gegenstrom zur Lösung eingeleitet wird, und wobei die TPPCl₂-Lösung aus dem Sumpfteil von D entnommen wird.

Außerdem betrifft die Erfindung ein Verfahren zur Herstellung von TPP durch Umsetzung von TPPCl₂ in Gegenwart von Aluminium, wobei zuvor die "aktiven Chlorverbindungen" auf unter 1000 ppm abgetrennt wurden.

Der Chlorgehalt bezieht sich dabei auf die Gesamtmenge der genannten "aktiven Chlorverbindungen", die in der TPPCl₂-Lösung von vornherein enthalten sind oder die bei der Herstellung entstehen können und in denen das Chlor entweder in anionischer Form vorliegt oder leicht in diese Form übergehen kann. Durch die "aktiven Chlorverbindungen" scheint die Bildung von chlorhaltigen Komplexverbindungen des reduzierenden Metalls begünstigt zu werden, die den Reaktionsvorgang nach den bisherigen Beobachtungen vermutlich empfindlich stören. Chlorverbindungen, in denen das Chlor fest kovalent gebunden ist, beispielsweise aromatische Chlorverbindungen wie Chlorbenzol oder Dichlorbenzol sind hingegen unkritisch, weswegen sie als Lösungsmittel verwendet werden können. Allgemein soll das Lösungsmittel ein ausreichendes Lösungsvermögen für die Triphenylphosphor-Verbindungen aufweisen, da das Verfahren sonst nur in relativ niedrigen Konzentrationen und somit nicht wirtschaftlich betrieben werden kann. Bevorzugte Lösungsmittel sind Toluol und Chlorbenzol.

Das erfindungsgemäße Verfahren zur Herstellung von TPP wird vorzugsweise in einem Temperaturbereich von etwa 60 bis 200°C, besonders von 80 bis 175°C ausgeführt. Der Druckbereich bei diesem Verfahren erstreckt sich allgemein von etwa 0,2 bis 10 bar. Vorzugsweise arbeitet man bei Normaldruck.

Man erhält die definitionsgemäß in die Reduktionsstufe einzusetzende TPPCl₂-Lösung zweckmäßigerweise dadurch, daß man die Rohlösung, wie sie bei der Umsetzung von TPPO mit Chlorierungsmitteln wie Thionylchlorid, Phosphortrichlorid, Phosphoroxychlorid oder vorzugsweise Phosgen anfällt, zum Sieden erhitzt, wobei die aktiven Chlorverbindungen zusammen mit einem Teil des dampfförmigen Lösungsmittels aus der Lösung ausgetragen und vorzugsweise in die Chlorierungsstufe zurückgeführt werden.

Mittels dieses Verfahrens kann die Konzentration der "aktiven Chlorverbindungen" auf wirtschaftliche und verfahrenstechnisch einfache Art und Weise auf unter 1000 ppm Cl in der Lösung gesenkt werden. In einer bevorzugten Ausführungsform verwendet man hierfür eine Destillationskolonne, die Füllkörper zur Steigerung der Wirksamkeit enthalten kann. Der Siedebereich des Verfahrens liegt bei etwa 100 bis 200°C, vorzugsweise 130 bis 175°C. Verminderter Druck kann sich empfehlen, um die Abtrennung der aktiven Chlorverbindungen zu erleichtern.

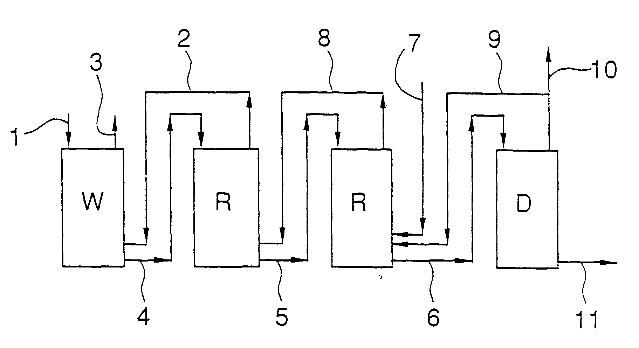

Dieses Verfahren wird im folgenden anhand der Zeichnung näher beschrieben. Einem oder mehreren hintereinander geschalteten Reaktionsgefäßen R wird die TPPO enthaltende Lösung und das Phosgen im Gegenstrom zugeführt. Dabei erfolgt eine Chlorierung des TPPO zu TPPCl₂ gemäß Reaktionsgleichung (1). Die Reaktionstemperatur beträgt vorzugsweise etwa 60 bis 150°C, besonders bevorzugt 80 bis 130°C. Zweckmäßigerweise nimmt man die Reaktion bei Normaldruck vor. Höhere Drücke, etwa bis zu 10 bar, können sich im Falle leicht siedender Lösungsmittel empfehlen.

Anstelle von mehreren hintereinandergeschalteten Reaktionsgefäßen, z.B. Rührkesseln, die man mit ansteigender Temperatur betreiben kann, läßt sich auch ein einziges Reaktionsgefäß, vorzugsweise eine Reaktionskolonne, verwenden. Als Reaktionskolonnen werden aus wirtschaftlichen Gründen Füllkörperkolonnen bevorzugt, jedoch eignen sich grundsätzlich Kolonnen beliebiger Bauart, z.B. Glockenboden- und Siebbodenkolonnen.

Die in das System durch Leitung (1) eingeführte TPPO-Lösung wird vor Zugabe in das erste Reaktionsgefäß (R) in einer vorgeschalteten Waschkolonne (W) dem Gasstrom aus dem ersten Reaktionsgefäß, der mittels Leitung (2) in die Waschkolonne W gelangt, nach dem Gegenstromprinzip zugeführt. Dabei werden die Bedingungen in der Waschkolonne so eingestellt, daß ein hoher Anteil des Phosgens aus dem Gasstrom in Lösung geht. Die Temperatur in der Waschkolonne liegt bei Normaldruck bei etwa 0 bis 100°C, vorzugsweise 20 bis 60°C. Durch Variation des Druckes wird das Lösungsverhalten beeinflußt. Mit einer Erhöhung des Druckes auf Werte bis ca. 5 bar wird die Löslichkeit des Phosgens gesteigert. Der aus der Waschkolonne durch Leitung (3) entnommene Gasstrom besteht hauptsächlich aus CO₂ und enthält nur noch wenig Phosgen. Die mit Phosgen angereicherte Lösung wird über Leitung (4) dem ersten Reaktionsgefäß zugeführt. Durch Leitung (5) wird die Lösung dem ersten Reaktionsgefäß entnommen und in ein zweites Reaktionsgefäß geführt. Mittels Leitung (7) wird frisches Phosgen in das letzte Reaktionsgefäß eingebracht. Der diesem Reaktionsgefäß entnommene Gasstrom wird über Leitung (8) im Gegenstrom zur Lösung in das vorgeschaltete Reaktionsgefäß geführt.

Die das letzte der Reaktionsgefäße R verlassende Lösung wird mittels Leitung (6) in eine Destillationskolonne (D), die ggf. handelsübliche Einbauten zur Steigerung der Wirksamkeit enthält, eingeleitet. Geeignet sind z.B. Glockenboden- und Füllkörperkolonnen. Für den Betrieb der Destillationskolonne gelten die Angaben für die Herstellung der TPPCl₂-Lösung, deren Konzentration an den "aktiven Chlorverbindungen" unter 1000 ppm Cl liegt. Man führt die Dämpfe, welche die Chlorverbindungen enthalten, gegebenenfalls nach Kondensation, wieder über Leitung (9) in das letzte der Reaktionsgefäße R zurück. Damit sich die Chlorverbindungen nicht im Laufe der Zeit im System der Apparate W, R und D anreichern, empfiehlt es sich, einen Teil der Dämpfe, die D verlassen, durch Leitung (10) auszuschleusen und auf reines Lösungsmittel aufzuarbeiten und das Lösungsmittel danach wieder in das System zurückzuführen. Die Leitungen zwischen den Apparaten, insbesondere zwischen W und R können mit Wärmeaustauschern versehen sein und der Stofftransport kann mit Fördereinrichtungen wie Pumpen oder Kompressoren vorgenommen werden. Alle Apparate und Apparateteile, die mit dem aggressiven Reaktionsgemisch in Berührung kommen, sollten zweckmäßigerweise aus korrosionsfesten Material bestehen.

Neben der bevorzugten Gegenstromfahrweise können die TPPO-Lösung und das Phosgen auch im Gleichstrom den Reaktionsgefäßen zugeführt werden, wobei im übrigen sinngemäß das Gleiche gilt wie für das Gegenstromverfahren.

Die TPPCl₂-Lösung, welche D über Leitung (11) verläßt, kann unmittelbar der Reaktion mit dem reduzierenden Metall, vorzugsweise Aluminium, unter an sich bekannten Bedingungen zugeführt werden. Das Metall wird vorzugsweise in Form von Gries eingesetzt und die Reaktionstemperatur beträgt 60 bis 200°C, bevorzugt 80 bis 175°C.

In einer zweckmäßigen Ausführungsform des erfindungsgemäßen Verfahrens erfolgt die Umsetzung von TPPO zu TPPC1₂ in Gegenwart eines Phosgenierungskatalysators wie vorzugsweise eines N,N-disubstituierten Formamids. Diese Verbindungen wirken als Phosgenübertrager und bilden mit Phosgen sog. Vilsmeyer-Verbindungen die unter Rückbildung der Formamide als eigentliche Chlorierungsmittel wirken. Da sich die Formamide wieder zurückbilden, wirken sie auch in geringen Mengen. Insbesondere eignen sich N,N-Dialkylformamide mit bis zu insgesamt 12 C-Atomen in den Alkylresten, wobei diese Alkylreste auch zu einem 5- bis 7-gliedrigen Ring verbunden sein können.

Nach beendeter Umsetzung versetzt man das Gemisch mit Wasser, wobei sich eine wäßrige salzsaure Phase des Metallsalzes bildet.

Die organische Phase wird zweckmäßigerweise destillativ auf reines TPP aufgearbeitet, wobei diese Verbindung bezogen auf das eingesetzte TPPO in einer Ausbeute von etwa 95 % anfällt. Ohne die erfindungsgemäße Absenkung der Konzentration an den "aktiven Chlorverbindungen" liegt die Ausbeute an Rein-TPP nur bei etwa 85 bis 90 %.

### Beispiel

### Herstellung von Triphenylphosphin

Einer Waschkolonne von 22 cm Höhe und 3 cm Durchmesser wurden ca. 880 g/h einer Lösung aus Triphenylphosphinoxid (TPPO) und Chlorbenzol zudosiert, wobei der Anteil von TPPO 12,5 Gew.-% betrug. Die Waschkolonne, welche Glasfüllkörper von 3 mm Durchmesser enthielt, wurde bei einer Temperatur von ca. 50°C betrieben.

Die anschließende Chlorierung wurde in einer Rührkesselkaskade bestehend aus zwei Rührkesseln mit jeweils einem Liter Füllvolumen durchgeführt. Die Rührerdrehzahl betrug hierbei jeweils 400 U/min, und die Reaktionstemperatur lag bei ca. 100°C. Die im Gegenstrom zugeführte Phosgenmenge betrug 43,6 g/h.

Als nachgeschaltete Destillationskolonne wurde eine Glockenbodenkolonne von 55 cm Höhe und 3 cm Durchmesser verwendet. Diese Glockenbodenkolonne enthielt 11 Böden und wurde bei einer Temperatur von ca. 135°C betrieben.

Das aus der Destillationskolonne gewonnene Produkt wurde anschließend mit Aluminiumgries einer mittleren Korngröße von etwa 200 bis 400 µm Durchmesser bei einer Temperatur von ca. 130°C reduziert.

Die Versuchszeit erstreckte sich über 211 Stunden. Insgesamt wurden 23 210 g TPPO, 9 200 g Phosgen und 1519 g Aluminium eingesetzt. Die Ausbeute an Triphenylphosphin betrug 96 %.

### Vergleichsversuch

Der Vergleichsversuch wurde unter den o. g. Bedingungen durchgeführt, allerdings ohne Verwendung einer Destillationskolonne zur Reduzierung des Gehaltes an "aktiven Chlorverbindungen". Der Austrag aus der Rührkesselkaskade wurde unmittelbar der Aluminiumreduktion zugeführt.

Analog zu dem ersten Versuch wurden äquivalente Massenströme an TPPO und Phosgen eingesetzt, dabei betrug der Anteil an TPPO in Chlorbenzol ebenfalls 12,5 Gew.-%. Für die anschließende Reduktion wurden 7,5 g/h an Aluminium benötigt.

Insgesamt wurden 43 340 g TPPO, 17 178 g Phosgen und 2 955 g Aluminium eingesetzt. Die Ausbeute an Triphenylphosphin betrug etwa 87 %.

## Patentansprüche

1. Verfahren zur kontinuierlichen Herstellung von Lösungen aus einem inerten Lösungsmittel und TPPCl₂, deren Gehalt an Phosgen, Chlor, Diphosgen, Chlorwasserstoff, Thionylchlorid, Sulfurylchlorid, Phosphortrichlorid, Phosphoroxychlorid und/oder aliphatischen Halogenverbindungen ("aktive Chlorverbindungen") unter 1000 ppm Cl liegt, durch Umsetzung von Triphenylphosphinoxid (TPPO) mit Phosgen in dem inerten Lösungsmittel, dadurch gekennzeichnet, daß man
a) die TPPO enthaltene Lösung und das Phosgen in einem oder mehreren nacheinander geschalteten Reaktionsgefäßen R im Gegenstrom zueinander führt,
b) die in das System eingeführte TPPO-Lösung in einer vorgeschalteten Waschkolonne W mit Phosgen aus dem entgegenströmenden Phosgenstrom unter solchen Bedingungen, unter denen sich das Phosgen löst, anreichert und aus der Waschkolonne den CO₂-Strom, der noch etwas Phosgen enthalten kann, entfernt, und daß man
c) die Lösung, welche das letzte der Reaktionsgefäße R verläßt, in eine Destillationskolonne D überführt, aus welcher das Phosgen und die "aktiven chlorverbindungen" zusammen mit einem Teil des Lösungsmittels abdestilliert werden, wobei dieses Gemisch wieder in das letzte Reaktionsgefäß zurückgeführt wird, in welches auch das frische Phosgen im Gegenstrom zur Lösung eingeleitet wird, und wobei die TPPCl₂-Lösung aus dem Sumpfteil von D entnommen wird.

2. Verfahren gemäß Anspruch 1, dadurch gekennzeichnet, daß man das TPPO und das Phosgen im Gleichstrom durch die Apparate R führt.

3. Verfahren nach Anspruch 1 oder 2, dadurch gekennzeichnet, daß man die Umsetzung von TPPO mit Phosgen in Gegenwart eines Phosgenierungskatalysators vornimmt.

4. Verfahren nach Anspruch 3, dadurch gekennzeichnet, daß man als Phosgenierungskatalysator ein N,N-substituiertes Formamid verwendet.

5. Verfahren zur Herstellung von Triphenylphosphin, dadurch gekennzeichnet, daß man die "aktiven Chlorverbindungen" in der gemäß Ansprüchen 1 bis 4 erhaltenen TPPCl₂-Lösung in der Destillationskolonne D bei 130 bis 175°C abtrennt und die Lösung anschließend in Gegenwart von Aluminium zu Triphenylphosphin umsetzt.

## Claims

1. A process for the continuous preparation of solutions which are composed of an inert solvent and TPPC1₂ and whose content of phosgene, chlorine, diphosgene, hydrogen chloride, thionyl chloride, sulfuryl chloride, phosphorus trichloride, phosphorus oxychloride and/or aliphatic halogen compounds (active chlorine compounds) is less than 1000 ppm Cl by reacting triphenylphosphine oxide (TPPO) with phosgene in the inert solvent, wherein
a) the TPPO-containing solution and the phosgene are passed countercurrently through one or more reaction vessels R arranged in series,
b) the TPPO solution introduced into the system is enriched, in an upstream scrubber column W, with phosgene from the phosgene countercurrent under conditions such that the phosgene dissolves, and the CO₂ stream which may still contain some phosgene is removed from the scrubber column, and
c) the solution which leaves the last of the reaction vessels R is transferred into a distillation column D from which the phosgene and the active chlorine compounds are removed together with part of the solvent by distillation, this mixture being returned to the last reaction vessel in which the fresh phosgene is also introduced countercurrently to the solution, and the TPPCl₂ solution being removed from the bottom part of D.

2. A process as claimed in claim 1, wherein the TPPO and the phosgene flow cocurrently through the apparatuses R.

3. A process as claimed in claim 1 or 2, wherein the reaction of TPPO with phosgene is carried out in the presence of a phosgenation catalyst.

4. A process as claimed in claim 3, wherein an N,N-disubstituted formamide is used as phosgenation catalyst.

5. A process for preparing triphenylphosphine, wherein the active chlorine compounds in the TPPCl₂ solution obtained as claimed in any of claims 1 to 4 are separated off in the distillation column D at from 130 to 175°C and the solution is subsequently reacted in the presence of aluminum to form triphenylphosphine.

## Revendications

1. Procédé pour la préparation continue de solutions consistant en un solvant inerte, et le dichlorure de triphénylphosphine (TPPCl₂), dont la teneur en phosgène, chlore, diphosgène, chlorure d'hydrogène, chlorure de thionyle, chlorure de sulfuryle, trichlorure de phosphore, oxychlorure de phosphore et/ou composés aliphatiques halogénés ("composés chlorés actifs") est inférieure à 1000 ppm de Cl, par réaction de l'oxyde de triphénylphosphine (TPPO) avec le phosgène dans le solvant inerte, caractérisé par le fait que
a) on fait passer la solution contenant le TPPO à contre-courant du phosgène dans un ou plusieurs récipients de réaction R en série,
b) on enrichit la solution de TPPO introduite dans l'installation dans une colonne amont de lavage W en phosgène provenant du courant de phosgène circulant à contre-courant dans des conditions telles que le phosgène se dissolve, et on évacue de la colonne de lavage le courant de CO₂ qui peut encore contenir un peu de phosgène, et
c) on fait passer la solution quittant le dernier des récipients de réaction R dans une colonne de distillation D d'où l'on distille le phosgène et les "composés chlorés actifs" avec une partie du solvant, ce mélange étant recyclé au dernier récipient de réaction dans lequel on injecte également le phosgène frais à contre-courant de la solution, et on recueille la solution de TPPCl₂ au pied de la colonne D.

2. Procédé selon la revendication 1, caractérisé par le fait que l'on envoie le TPPO et le phosgène en courants parallèles dans les appareils R.

3. Procédé selon la revendication 1 ou 2, caractérisé par le fait que la réaction du TPPO avec le phosgène est réalisée en présence d'un catalyseur de phosgénation.

4. Procédé selon la revendication 3, caractérisé par le fait que le catalyseur de phosgénation utilisé est un formamide N,N-substitué.

5. Procédé de préparation de la triphénylphosphine, caractérisé par le fait que l'on sépare les "composés chlorés actifs" de la solution de TPPCl₂ obtenue selon les revendications 1 à 4 dans la colonne à distiller D à des températures de 130 à 175°C et on convertit ensuite la solution en triphénylphosphine en présence d'aluminium.
